# EUROPÄISCHE PATENTSCHRIFT

(11) **EP 1 474 665 B1**
(45) Veröffentlichungstag und Bekanntmachung des Hinweises auf die Patenterteilung: **06.09.2006**
(21) Anmeldenummer: 02700229.4
(22) Anmeldetag: 13.02.2002
(51) Int. Cl.: G01J 3/06

(54) **SPEKTROMETER**
SPECTROMETER
SPECTROMETRE

(43) Veröffentlichungstag der Anmeldung: 10.11.2004
(73) Patentinhaber: Fraunhofer-Gesellschaft zur Förderung der angewandten Forschung e.V., 80636 München (DE)
(72) Erfinder: SCHENK, Harald, 01139 Dresden (DE); GRUEGER, Heinrich, 01109 Dresden (DE)
(74) Vertreter: Schoppe, Fritz
(86) Internationale Anmeldenummer: PCT/EP2002/001507
(87) Internationale Veröffentlichungsnummer: WO 2003/069289

(56) Entgegenhaltungen:
- EP-B1- 0 378 108
- DE-A1- 19 955 759
- GB-A- 1 050 561
- US-A- 5 497 231
- US-A- 5 963 320

## Beschreibung

Die vorliegende Erfindung bezieht sich allgemein auf die Spektrometrie, wie zum Beispiel die Emissions-, Absorptions- oder Transmissions-Spektroskopie, und insbesondere auf ein Spektrometer, welches als Mikrospektrometer realisierbar ist.

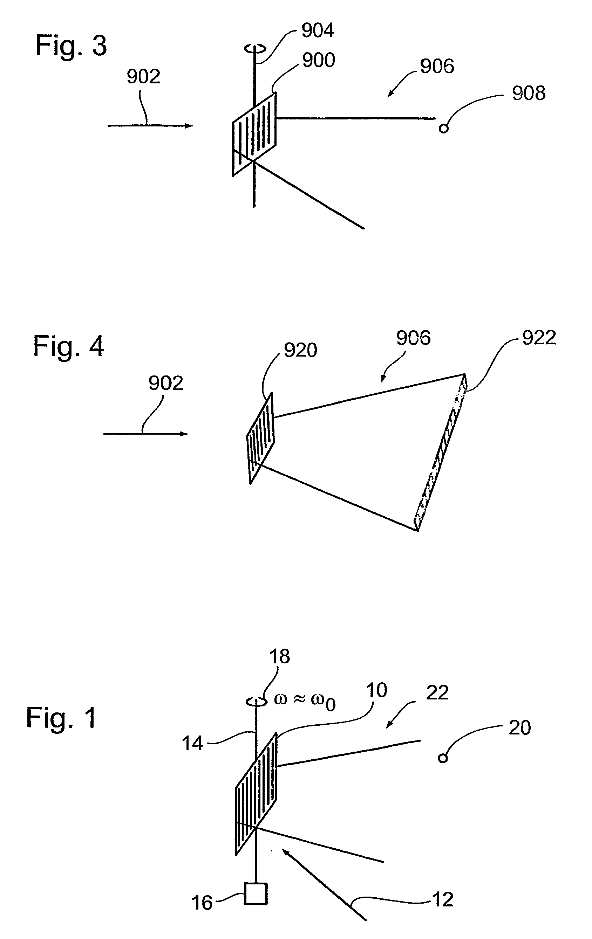

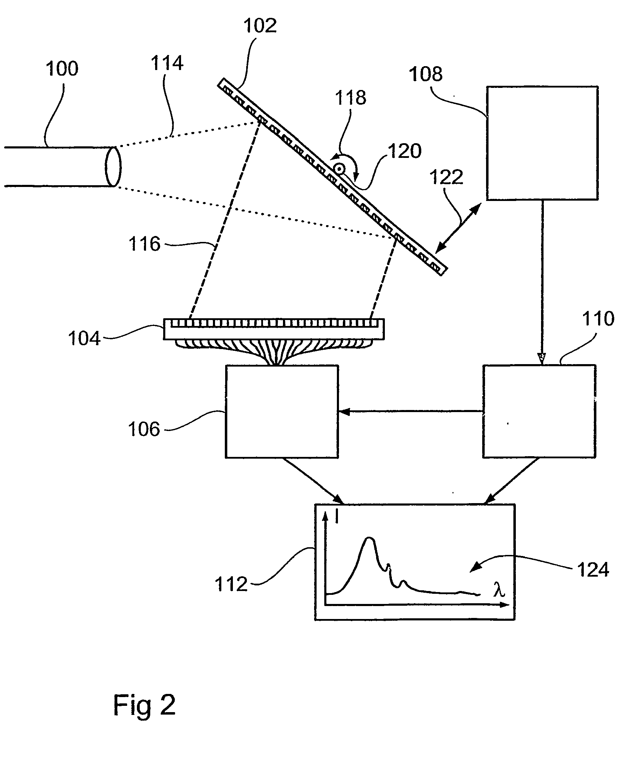

Mit dem Spektrometer ist es möglich Licht in einem bestimmten Spektralbereich wellenlängenabhängig zu vermessen. Kernstück jeden Spektrometers ist ein dispersives Element, wie z.B. ein Gitter oder Prisma, auf das das Licht, dessen spektrale Verteilung bestimmt werden soll, einfällt, und das das einfallende Licht in seine spektralen Bestandteile zerlegt, und ein entsprechender Detektor zum Aufnehmen eines oder mehrer der spektralen Bestandteile. Fig. 3 zeigt eine klassische Anordnung eines Gitterspektrometers. Ein bewegliches Gitter 900 wird durch einen Eintrittsspalt und ein bündelndes Element (nicht gezeigt) mit einem Lichtstrahl 902 beleuchtet, dessen spektrale Verteilung bestimmt werden soll. Das bewegliche Gitter 900 ist um eine Achse 904 drehbar gelagert, wobei die Einstellung des Gitters 900 quasi statisch, typischerweise über einen Schrittmotor, erfolgt. Das nach Wellenlängen aufgespaltene Licht 906 - genauer einer spektraler Bestandteil desselben - wird von einem Detektorelement 908 erfaßt, während das Gitter 900 in verschiedene Stellungen bewegt wird. Auf diese Weise wird das nach Wellenlängen aufgespaltene Licht 906 durch den Detektor 908 abgetastet, wobei dessen Meßsignale entsprechend aufgezeichnet werden, um die spektrale Verteilung des Lichtstrahles 902 zu bestimmen.

Für sogenannte "Low-Cost-" (Niedrigpreis-) Anwendungen sind Geräte des Typs von Fig. 3 aufgrund der aufwendigen mechanischen Steuerung der quasi statischen Bewegung des Gitters 900 zu aufwendig und teuer. Zudem ist der Gerätetyp von Fig. 3 empfindlich gegenüber Stößen und Temperaturschwankungen, und die Lichtdichtheit des Gehäuses (nicht gezeigt) dieser Geräte muß trotz aller notwendigen Gerätezuleitungen für beispielsweise den mechanischen Antrieb des Gitters 900 und den Betrieb des Detektorelements 908 gewährleistet sein. Insbesondere ist die Meßdauer zur Bestimmung der spektralen Verteilung des einfallenden Lichtes 902 lang.

Neben den klassischen Lösungen von Fig. 3 gibt es seit einigen Jahren Miniaturspektrometer in Form von PC-Einsteckkarten oder in Form von kleineren externen Gehäusen mit einer entsprechenden Computerschnittstelle. Der prinzipielle Aufbau dieser Miniaturspektrometer ist in Fig. 4 gezeigt. Ein Gitter 920, auf welches der Lichtstrahl 902 einfällt, eine Photodiodenzeile 922 sowie eine notwendige Ansteuerlogik (nicht gezeigt) sind auf einer Platine (nicht gezeigt) angebracht. Das Gitter 920 ist bei diesen Miniaturspektrometern feststehend bzw. fest angebracht und befindet sich gemeinsam mit der Photodiodenzeile 922 in einer Verkapselung (nicht gezeigt). Ein Beispiel für ein Miniaturspektrometer der in Fig. 4 gezeigten Art ist beispielsweise in der DE 19836595A1 gezeigt.

Obwohl die Preise solcher Spektrometer mit festem Gitter niedrig sind, ist bei diesen Fest-Gitter-Systemen nachteilhaft, daß der Wellenlängenbereich, der durch die Photodiodenzeile 922 erfaßt wird, sowie die spektrale Auflösung bei der Herstellung festgelegt werden und somit unveränderbar sind. Eine Möglichkeit, Wellenlängenbereich und spektrale Auflösung an eine spezielle Anwendung basierend auf einem bestehenden Angebot an solchen Fest-Gitter-Spetrometern anzupassen, besteht lediglich darin, mehrere Spektrometer im Master-Slave-Betrieb parallel zu verwenden, wobei mehrere Spektrometer verschiedener Auflösung bzw. verschiedenen Wellenlängenbereichs gekoppelt werden. Hierdurch entstehen jedoch zusätzliche Kosten pro Slavemodul. Eine flexible Lösung, bei der der erfaßbare Wellenlängenbereich sowie die spektrale Auflösung jederzeit verändert werden können, wird zudem auch durch diese modulare Kopplung mehrerer Module nicht erzielt.

Ein spezielles Problem beim Entwurf von Mikrospektrometern besteht darin, daß der zur Verfügung stehende Platz begrenzt ist, wodurch der erfaßbare Detektionsbereich einerseits und die erzielbare Auflösung andererseits begrenzt sind. Der erfaßbare Wellenlängenbereich hängt von den fest vorgegebenen Gitterabmessungen, insbesondere der Gitterabstand, und dem Abstand des Gitters von dem Detektorelement, der sogenannten Basislänge, ab. Die Auflösung des Spektrometers hängt neben anderen Größen, wie z.B. der Größe eines Eintritts- und Austrittsspalts und der verwendeten Brechungsordnung, von der Basislänge, der Gitterstrichzahl und dem Abstand der Photodiodenelemente der Photodiodenzeile bzw. der Genauigkeit der Gitterpositionierung ab. Wird beispielsweise unter Verwendung einer Photodiodenzeile mit fester Dichte und unter Berücksichtigung von maximalen Abmessungen ein Spektrometer des Typs von Fig. 4 für eine hohe Auflösung ausgelegt, so geschieht dies unter Einbußen des erfaßbaren Spektralbereichs, und wird umgekehrt das Spektrometer für einen großen Spektralbereich entworfen, ergibt sich eine schlechtere Auflösung.

Typische Prozeßspektrometer, die in der Form von Zeilenspektrometern mit fest montiertem Gitter und CCD- oder Photodiodenzeile gebildet sind, verwenden Zeilenphotodetektoren mit typischerweise 1024 maximal 2048 Zeilen. Zur Trennung zweier Spektrallinien sind theoretisch mindestens drei Zeilenelemente notwendig, wobei jedoch praktisch etwa 5 bis 7 Zeilen zur Trennung von Spektrallinien notwendig sind. Unter der Annahme des Einsatzes eines Lichtwellenleiters als Spalt und der Basislänge eines PC-Kartenspektrometers ergibt sich bei diesen Zeilenspektrometern eine Auflösung im Bereich von 0,2 nm bei einem spektralen Detektionsbereich von 60 nm. Diese Auflösung ist zwar für viele Fälle ausreichend, der resultierende spektrale Detektionsbereich ist jedoch für viele Anwendungen zu klein, da zur Auswertung meistens zwei oder mehr Spektrallinien des zu untersuchenden Spektrums berücksichtigt werden müssen und deshalb im Detektionsbereich liegen müssen. Wird das Spektrometer alternativ für eine niedrigere Auflösung ausgelegt, kann ein größerer Bereich von beispielsweise 600 nm erreicht werden, wie es beispielsweise für die Spektroskopie über den sichtbaren Spektralbereich, d.h. für die Wellenlängen von 400 nm bis 800 nm, hinaus ausreichen würde, jedoch bietet die sich ergebende Auflösung von 2 nm nur eine sehr mäßige Qualität.

Wie es die vorhergehende Erörterung gezeigt hat, besteht ein Bedarf nach einem Spektrometertyp, der mikromechanisch herstellbar ist, eine hohe mechanische Stabilität aufweist, und sowohl bezüglich des spektralen Detektionsbereiches als auch der spektralen Auflösung ausreichende Eigenschaften aufweist, und dabei gleichzeitig kostengünstig herstellbar ist. Bei dem bisherigen klassischen Spektrometerlösungen von Fig. 3 ergeben sich bei einer Miniaturisierung Probleme im Hinblick auf die erzeugbaren Auslenkungen des Gitters, was wiederum den spektralen Detektionsbereich einschränkt. Ferner verhindert die aufwendige Steuerung zur quasistatischen Bewegung eine kostengünstige Realisierung. Bei den Fest-Gitter-Systemen von Fig. 4 ist keine hohe Auflösung bei gleichzeitigem großem spektralen Detektionsbereich realisierbar.

Die US 5,963,320 offenbart ein Spektrometer, bei dem die Maske bzw. die Schablone, die sich in der Focusebene des Spektrometers befindet, in eine resonante Schwingung versetzt wird, während das dispersive Element fest bleibt.

Die US 5,497,231 bezieht sich auf ein Spektrometer mit einer Kombination aus einem für die Einstellung des Spektrumbereiches verkippbaren Brechungsgitter und einem resonant schwingenden Spiegel. Die Aufhängung des Spiegels erfolgt über einen Federstreifen.

In der DE 19955759 A1 wird ein Spektrometer mit mikromechanischem Spiegel beschrieben, bei dem der Spiegel als Kippspiegel aus einkristallinem Silizium der monolithisch über Torsionsbänder mit einem fixen Träger verbunden ist. Um einen größeren Auslenkbereich und damit einen größeren nutzbaren Wellenlängenbereich zu ermöglichen, wird der Spiegel unter Ausnutzung der Resonanzüberhöhung angetrieben. Die aktuelle Winkelposition des Kippspiegels wird kapazitiv erfasst, und der Antrieb erfolgt elektrostatisch über eine rückwärtige Elektrodeneinheit. Die Erfassung erfolge entweder zu bestimmten Triggerzeitpunkten tₖ für eine monochromatische Strahlungsmessung Sₖ bei vorgegebenen Wellenlängen λₖ oder indem jedem Strahlungsmesswert Sk seine jeweilige Wellenlänge λₖ zugeordnet wird, was eine nachträgliche numerische Interpolation der Messwerte zu vorgegebenen Wellenlängen gestatte.

Die Aufgabe der vorliegenden Erfindung besteht darin, ein Spektrometer sowie ein Verfahren zur Bestimmung einer spektralen Verteilung zu schaffen, so daß mit relativ niedrigem Kostenaufwand und trotz Miniaturisierung sowohl eine zufriedenstellende spektrale Auflösung als auch ein zufriedenstellender spektraler Detektionsbereich und/oder eine hohe mechanische Stabilität erzielt werden kann.

Diese Aufgabe wird durch ein Spektrometer gemäß Anspruch 1 und ein Verfahren gemäß Anspruch 9 gelöst.

Der vorliegenden Erfindung liegt die Erkenntnis zugrunde, daß die Vorteile eines sich beweglichen dispersiven Elements bzw. Monochromators in Hinblick auf das einfache Detektorelement und die Einstellbarkeit des Meßbereichs und der Auflösung auch bei einer Miniaturisierung eines Spektrometers genutzt werden können, wenn ein schwingungsfähig aufgehängtes dispersives Element anstelle mittels eines quasistatischen Antriebs im wesentlichen in Resonanz oder mit einer Schwingung mit einer Frequenz berieben wird, die in einem solchen Verhältnis zur Eigenfrequenz des dispersiven Elements ist, daß eine Resonanzüberhöhung desselben auftritt. Im Vergleich zu den Miniaturspektrometern mit festem Gitter entfällt die Notwendigkeit für eine teuere und aufwendige Detektorzeile. Zudem ist der Detektionsbereich nicht oder kaum durch die Größenabmessungen eingeschränkt. Im Vergleich zur quasistatischen Ansteuerung des dispersiven Elements führt die erfindungsgemäße resonante Ansteuerung des dispersiven Elements auf Grund der auftretenden Resonanzerhöhung auch bei Realisierung in miniaturisierter Form, wie z.B. in CMOS-kompatibler Mikromechaniktechnologie, trotz der hohen Eigenfrequenz zu hohen erzielbaren Auslenkungen bei vertretbarem Energieaufwand, wodurch wiederum ein größerer spektraler Detektionsbereich ermöglicht wird. Zudem bewirkt eine schwingungsbefähigende Aufhängung des dispersiven Elements eine Erhöhung der mechanischen Stabilität gegen Erschütterungen, was wiederum die Attraktivität der erfindungsgemäßen Bestimmung der spektralen Verteilung gegenüber den bisherigen Spektrometerlösungen für Anwendungsbereiche erhöht, bei denen widrige Bedingungen herrschen und beispielsweise Stöße und andere äußere Erschütterungen auftreten, wie z.B. im Automobilbereich.

Gemäß einem Ausführungsbeispiel der vorliegenden Erfindung besteht ein Spektrometer aus einem dispersiven Element, einem einzigen Detektorelement und einer Ansteuerung zum Versetzen des dispersiven Elements wie z.B. einem Schwing spiegel mit einer Gitterstruktur, in eine im wesentlichen resonante Schwingung. Eine Synchronisationseinrichtung synchronisiert den Antrieb mit dem Detektor, so daß die Abtast- oder Verschlußzeiten mit der im wesentlichen resonanten Schwingung synchronisiert sind. Für jeden erfaßten spektralen Bestandteil des Detektors wird die momentane Stellung des dispersiven Elements erfaßt, wobei dem erfaßten spektralen Bestandteil die Wellenlänge zugeordnet wird, die der momentanen Einstellung des dispersiven Elements entspricht.

Gemäß einer speziellen Realisierung der vorliegenden Erfindung besteht ein Spektrometer aus einem mikromechanisch hergestellten Schwingspiegel mit Gitterstruktur, einer Photodioden- oder CCD-Zeile, einer Steuereinrichtung, die mit einem Antrieb des Schwingspiegels gekoppelt ist und die Belichtungszeitpunkte des Detektors steuert, sowie einer Kombinationseinrichtung, die aufeinanderfolgende Aufnahmen bzw. Belichtungen der Photodiodenzeile miteinander kombiniert, um die spektrale Verteilung des einfallenden Lichtes zu erfassen.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Darstellung eines Spektrometeraufbaus gemäß einem Ausführungsbeispiel der vorliegenden Erfindung;
- Fig. 2: eine spezielle Realisierung eines Spektrometers gemäß der vorliegenden Erfindung;
- Fig. 3: eine schematische Darstellung eines herkömmlichen Spektrometertyps; und
- Fig. 4: eine schematische Darstellung eines weiteren herkömmlichen Spektrometertyps.

Anhand von Fig. 1 wird zunächst eine vereinfachte Darstellung eines Spektrometers gemäß einem Ausführungsbeispiel der vorliegenden Erfindung beschrieben. Das Spektrometer von Fig. 1 umfaßt ein bewegliches Gitter 10, das einen einfallenden Lichtstrahl 12 empfängt, dessen spektrale Verteilung bestimmt werden soll. Das bewegliche Gitter 10 ist als schwingungsfähig aufgehängter Spiegel mit einer Gitterstruktur ausgeführt und ist im vorliegenden Fall um eine Achse 14 schwingungsfähig drehbar gelagert bzw. aufgehängt. Die Aufhängung, (nicht gezeigt) des beweglichen Gitters 10 definiert eine Rückstellkraft, die abhängig von der Auslenkung des beweglichen Gitters 10 aus der Ruhelage ist. Die Aufhängung besteht beispielsweise aus zwei Stegen, die einen Rahmen des Gitters (in der Figur von oben und von unten) entlang der Achse 14 an zwei gegenüberliegenden Seitenmitten tragen, wobei die Rückstellkraft der Torsionskraft entspricht, die durch Torsion der Stege während der Schwingung entsteht. Es kann jedoch ferner eine andere Aufhängung vorgesehen sein, wie z.B. eine einseitig eingespannte Aufhängung mit Scherkräften. Ferner ist dem beweglichen Gitter 10 eine Resonanzfrequenz ω₀ für Schwingungen um die Ruhelage um die Achse 14 zugeordnet, die von der Federkonstante der Aufhängung bzw. Halterung sowie den Abmessungen des Gitters 10 abhängt.

Ein Antrieb bzw. eine Ansteuerung 16 versetzt das bewegliche Gitter 10 in eine Schwingung 18 mit einer Frequenz ω, die in der Nähe der Resonanzfrequenz liegt (ω≈ω₀). Der Antrieb des Gitters 10 erfolgt beispielsweise auf elektrostatische, induktive, kapazitive oder piezoelektrische Weise. Der Antrieb besteht beispielsweise aus ineinandergreifenden Interdigitalelektroden, einer beweglichen an dem Gitter 10 und einer festen.

Die Frequenz mit der die Schwingung des Gitters 10 angeregt wird, liegt zumindest in einem Bereich in der Nähe der Resonanzfrequenz, bei der Resonanzüberhöhung in einem für den jeweiligen Anwendungsfall ausreichenden Maße auftritt, wie z.B. in einem Bereich von 90% der Resonanz- bzw. Eigenfrequenz bis 110% der Resonanzfrequenz, oder einem Bereich bei dem die Resonanzüberhöhung mindestens eine 10%-tige Steigerung der Auslenkung bzw. Amplitude der Schwingung des Gitter 10 bewirkt, wie sie bei gleicher Anregungskraft(amplitude) im Fall konstanter Erregung (Frequenz gleich Null) auftreten würde. Der Grad an Resonanzüberhöhung hängt von der Güte des Schwingungssystems aus Halterung und aufgehängtem Gitter ab.

Ein Detektor 20 ist angeordnet, um einen Teil des durch das bewegliche Gitter 10 in seine spektralen Bestandteile zerlegten Lichts 22 zu empfangen, der auf den Detektor 20 auftrifft, und dessen Intensität zu erfassen. Der Detektor ist in einem vorbestimmten Abstand hinter (aus der Richtung des Lichtstrahls gesehen) dem Gitter 10 angeordnet, der sog. Basislänge. Die von dem Detektor 20 zu einem gegebenen Zeitpunkt erfaßte Intensität entspricht dem spektralen Anteil des Lichtstrahls 12 an einer Wellenlänge, die der augenblicklichen Stellung des Gitters 10 während der Schwingung zugeordnet ist. Die maximale Auslenkung des Gitters 10 definiert folglich den maximal erfaßbaren Detektionsbereiches des Spektrometers von Fig. 1.

Aufgrund der bei dem resonanten Betrieb des Gitters 10 auftretenden Resonanzerhöhung ist durch die Ansteuerung 16 auch bei einem hohen Miniaturisierungsgrad eine zufriedenstellende Auslenkung erzielbar. Die hohen Rückstellkräfte, die sich bei der Aufhängung bzw. Halterung in dem Fall der Realisierung des Gitters 10 in einem Halbleiter-Chip aufgrund der hohen Steifheit von Silizium oder des jeweils verwendeten Halbleitermaterials ergibt, können auf diese Weise unter Ausnutzung der Resonanzüberhöhung überwunden werden, so daß sich ausreichende Auslenkungen und damit ein großer erfaßbarer Wellenlängenbereich ergibt.

Um eine spektrale Verteilung des Lichtstrahls 12 über einen Wellenlängenbereich hinweg zu bestimmen, erfaßt der Detektor 20 in aufeinanderfolgenden Zeitpunkten das durch das bewegliche Gitter 10 in seine spektralen Bestandteile zerlegte Licht 22 bzw. tastet dasselbe ab, während das Gitter 10 in Resonanz schwingt. Die durch den Detektor 20 erfaßte Intensität zu einem bestimmten Zeitpunkt entspricht demjenigen spektralen Bestandteil des Lichtstrahles 12 bzw. derjenigen Wellenlänge, die durch die Lage zwischen dem Detektor 20 und dem beweglichen Gitter 10 der augenblicklichen Stellung des beweglichen Gitters 10 zum Zeitpunkt der Erfassung zugeordnet ist. Nach der Erfassung der spektralen Bestandteile des Lichtstrahles 12 an mehreren Wellenlängen ist die Bestimmung der spektralen Verteilung abgeschlossen. Zur Verbesserung des Signal/Rausch-Verhältnisses, kann über mehrere Messungen gemittelt werden.

Zur Auswahl der Belichtungs- oder Aufnahmezeitpunkte, zu denen der Detektor 20 eine Abtastung des in seine spektralen Bestandteile zerlegten Lichtes 22 vornimmt, und damit der abgetasteten Wellenlängen, kann eine Steuereinheit (nicht gezeigt) mit dem Detektor 20, um an denselben Auslöseimpulse zu senden, und mit der Ansteuerung 16, um von derselben eine Signal zu erhalten, das die augenblickliche Position angibt, verbunden sein. Zur Steuerung der Belichtungszeitpunkte bestehen verschiedene Möglichkeiten. Gemäß einer ersten Möglichkeit werden sowohl das mechanische Gitter 10 als auch der Detektor 20 mit festen Schwingungs- bzw. Belichtungsfrequenzen betrieben, wobei die Steuereinheit den Betrieb des Detektors 20 und den Betrieb der Ansteuerung 16 geeignet synchronisiert. Die Erfassungs- bzw. Abtastfrequenz des Detektors 20 beträgt beispielsweise ein ganzzahliges Vielfaches n der Schwingungsfrequenz ω, so daß jede Bestimmung der spektralen Verteilung, also jede vollständige Aufnahme eines Spektrums, aus n Abtastwerten besteht und pro Schwingung wiederholt wird. Erfindungsgemäß jedoch beträgt die Abtastfrequenz des Detektors 20 ein ganz rationales Vielfaches n/m (n,m teilerfremd) der Schwingungsfrequenz ω, so daß jede Bestimmung der spektralen Verteilung aus n*m Abtastwerten besteht und jede m-te Schwingung wiederholt wird.

Eine weitere Möglichkeit besteht darin, daß der Detektor 20 derart mit dem Antrieb 16 synchronisiert ist, daß derselbe die Erfassung stets an einer festen Wellenlänge vornimmt, d.h. immer dann, wenn sich das bewegliche Gitter 10 in einer bestimmten Stellung befindet. Durch beispielsweise manuelles oder automatisiertes Variieren der vorbestimmten Stellung und damit der zugeordneten Wellenlänge kann der erwünschte Wellenlängenbereich abgetastet werden, wobei der Detektor 20 pro Schwingung des beweglichen Gitters 10 einen Abtastwert ausgibt, der der Intensität des Lichtes 12 an der augenblicklich eingestellten Wellenlänge entspricht. Die Steuereinheit übernimmt bei der letztgenannten Möglichkeit beispielsweise die Synchronisation des Detektors 20 und der Ansteuerung 16 und stellt die augenblicklich abzutastende Wellenlänge über einen Phasenversatz der Belichtungs- zur Schwingungsfrequenz ein.

Der durch das Spektrometer von Fig. 1 maximal erfaßbare Wellenlängenbereich wird durch die Gitterabmessungen des beweglichen Gitters 10, die Lagebeziehung zwischen dem beweglichen Gitter 10 und dem Detektor 20 sowie der maximalen Auslenkung des beweglichen Gitters 10 bestimmt. Aufgrund des erfindungsgemäßen Betriebs des beweglichen Gitters 10 im Resonanzbereich ist es, wie oben erwähnt, aufgrund der Resonanzüberhöhung möglich, auch in dem Fall eines mikromechanisch hergestellten beweglichen Gitters 10 mit einem vertretbaren Energieaufwand ausreichende Auslenkungen zu erzeugen, so daß ein großer erfaßbarer Detektionsbereich sichergestellt ist.

Die maximale Auflösung des Spektrometers von Fig. 1 unterliegt bis auf physikalischen Grenzen keinen weiteren Beschränkungen, so daß eine Realisierung des Spektrometers von Fig. 1 mit der technisch maximal möglichen Auflösung arbeiten kann. Im Vergleich zu den in der Beschreibungseinleitung beschriebenen Spektrometern mit einem quasi statisch betriebenen Gitter entfällt eine aufwendige Gittersteuerung, die im Vergleich zu der erfindungsgemäßen resonanten Schwingung des Gitters mechanisch sehr empfindlich gegenüber Stößen und Erschütterungen und teuer ist.

Ein weiterer Vorteil des Spektrometers von Fig. 1 besteht darin, daß das mikromechanische Gitter und gegebenenfalls zusätzlich ein dazugehöriger Ansteuerschaltkreis kostengünstig im Scheibenverbund mit CMOS-kompatibler Technologie realisiert werden können. Auf diese Weise können große Stückzahlen von Gittern mit Halterung bzw. Aufhängung auf effiziente Weise hergestellt werden.

Da der Detektor 20, wie in Fig. 1 dargestellt, als ein Einzelelement, wie z.B. eine Photodiode oder ein Photomultiplier, mit gegebenenfalls einem dazugehörigen Spalt ausgeführt sein kann, sind die Kosten des Spektrometers zu denjenigen der in der Beschreibungseinleitung beschriebenen Miniaturspektrometer mit Photodiodenzeile deutlich verringert. Folglich ist das Spektrometer von Fig. 1 in großen Mengen zu sehr günstigen Konditionen herstellbar. Zudem bietet das Spektrometer von Fig. 1 die Möglichkeit eine gute Auflösung mit einem großen und variablen Spektralbereich bei gleichzeitig sehr kompakter Bauweise zu kombinieren. Zugleich ist das Spektrometer aufgrund der schwingungsfähigen Aufhängung des Gitters unempfindlich gegen Stöße und Erschütterungen und benötigt nur minimale oder sogar keinen Kalibrieraufwand.

Bezugnehmend auf Fig. 2 wird im folgenden eine spezielle Realisierung eines Spektrometers gemäß einem Ausführungsbeispiel der vorliegenden Erfindung beschrieben, welches ein resonant betriebenes Gitter sowie eine Photodiodenzeile aufweist und somit die Vorteile eines beweglichen dispersiven Elements mit denjenigen einer Detektorzeile kombiniert. Insbesondere ist das Spektrometer von Fig. 2 als Prozeßspektrometer geeignet.

Das Spektrometer von Fig. 2 besteht aus einem Lichtwellenleiter 100, einem beweglichen bzw. schwingenden Gitter 102, einer Detektorzeile 104, wie z.B. einer Photodioden- oder CCD-Zeile, die aus einer Mehrzahl von Detektorelementen besteht, die durchnummeriert sind, einem Auswerteschaltkreis 106, einer Gitteransteuerung 108, einer Steuereinheit 110 und einer Rechnereinheit 112. Die Steuereinheit 110 ist über den Auswerteschaltkreis 106 mit der Detektorzeile 104, um derselben Signal zum Auslösen der Belichtung bzw. Verschlußsignale zuzuführen, mit der Gitteransteuerung 108, um von derselben Informationen über die augenblickliche Stellung des Gitters 102 zu erhalten, und mit der Rechnereinheit 112 verbunden, um derselben Informationen zuzuführen, die zur Herleitung einer Wellenlängenskala für die von der Detektorzeile 104 erfaßten Intensitätswerte notwendig sind oder diese Wellenlängenskala selbst anzeigen. Die Rechnereinheit ist über den Auswerteschaltkreis 106 ebenfalls mit der Detektorzeile verbunden, um von derselben die erfaßten wellenlängenabhängigen Intensitätswerte zu erhalten.

Der Lichtwellenleiter 100 dient gleichzeitig als Eintrittsspalt und ist geeignet angeordnet, um das Licht, dessen spektrale Verteilung bestimmt werden soll, derart in das Spektrometer einzukoppeln, daß es auf das schwingende Gitter 102 auftrifft, wie es durch gepunktete Linien 114 angedeutet ist. Der Lichtwellenleiter 100 weist beispielsweise einen Durchmesser von 50 bis 200 µm auf. Das auf das Gitter 102 auffallende Licht 114 wird durch das Gitter 102 in seine spektralen Bestandteile zerlegt und trifft, wie es durch gestrichelte Linien 116 dargestellt ist, auf der Detektorzeile 104 auf. Jedes Detektorelement der Detektorzeile 104 gibt die erfaßte Intensität an den Auswerteschaltkreis 106 aus, der diese Intensitäten unter Angabe der entsprechenden Detektorelementnummer des jeweiligen Detektorelements an die Rechnereinheit 112 weiterleitet.

Die Gitteransteuerschaltung 108 bewirkt eine Schwingung 118 des Gitters 102 um eine Achse 120 mit im wesentlichen der Resonanzfrequenz des Gitters 102. Der Antrieb durch die Ansteuerschaltung 108 erfolgt über eine mechanische, induktive oder kapazitive oder eine andere geeignete Kopplung 122. Die Ansteuerschaltung 108, die die Schwingungsfrequenz des Gitters 102 im wesentlichen auf die Resonanzfrequenz regelt, erfaßt zudem die momentane Stellung des Gitters 102 und gibt diese Informationen an die Steuereinheit 110 aus. Wie es bezugnehmend auf Fig. 1 bereits beschrieben worden ist, definiert die augenblickliche Stellung des Gitters 102 für jedes Detektorelement eine Wellenlänge, die für dieses Detektorelement erfaßbar ist. Jeder Stellung ist folglich ein Wellenlängenbereich, innerhalb dessen das spektral zerlegte Licht 116 durch die Detektorzeile abgetastet wird, oder eine Lage einer Zentralwellenlänge entlang einer Ausdehnungsrichtung der Detektorzeile 104 zugeordnet. Die Detektorzeile ist schräg und vorzugsweise senkrecht zu einer Ebene angeordnet, die parallel zur Achse 120 verläuft und mit der Spiegeloberfläche des Gittes 102 in der Ruhelage desselben einen Winkel einschließt, der gleich dem Einfallswinkel des Lichtstrahls 114 ist.

Die Steuereinheit 110 überwacht die Informationen über die augenblickliche Stellung des Gitters 102 und gibt an den Auswerteschaltkreis 106 zu den Zeitpunkten, zu denen eine Belichtung bzw. Aufnahme durch die Photodiodenzeile 104 vorgenommen werden soll, Auslöseimpulse aus, der dieselben wiederum an die Photodiodenzeile 104 weiterleitet, um die Detektorelemente zu veranlassen, die Abtastung des wellenlängenabhängig aufgespaltenen Lichtes 116 vorzunehmen.

Die Steuereinheit 110 berechnet außerdem zu jedem Auslöseimpuls oder jeder Stellung des Gitters 102 zum Zeitpunkt des Auslösimpulses den Wellenlängenbereich, der der Stellung des Gitters 102 zu diesem Belichtungszeitpunkt zugeordnet ist und angibt, welcher Wellenlängenbereich durch die Detektorelemente der Detektorzeile 104 zum Belichtungszeitpunkt abgetastet wird, oder eine andere gleichwertige Angabe, wie z.B. die Lage der Zentralwellenlänge zum Zeitpunkt der Belichtung in Einheiten der Detektorelementnummer, und leitet diese Informationen an die Rechner 112 weiter, die aus diesen Informationen jeder Intensität bzw. jeder zugeordneter Photodiodennummer eine Wellenlänge zuordnet und hierdurch die Wellenlängenskala kalibriert. Die Rechnereinheit 112 gibt als Ausgangssignal die spektrale Verteilung des Lichtes 114 aus, wie es schematisch durch einen Graphen 124 dargestellt ist, bei dem die x-Achse der Wellenlänge λ und die y-Achse der Intensität I entspricht, und in welchem schematisch eine exemplarische spektrale Intensitätsverteilung dargestellt ist. Das Ausgangssignal der Rechnereinheit 112 entspricht somit einer Darstellung der gemessenen Intensitätssignale gegen die errechneten Wellenlängenskala, die wiederum dem gemessenen optischen Spektrum des einfallenden Lichts 114 entspricht.

Das Spektrometer von Fig. 2 ist in verschiedenen Betriebsmodi betreibbar. In einem ersten Betriebsmodus bestimmt die Steuereinheit 110 die Belichtungs- bzw. Abtastzeitpunkte derart, daß dieselben stets bei einer bestimmten Stellung des Gitters 102 bzw. einer bestimmten Auslenkung desselben erfolgen. Die Steuereinheit steuert folglich die Funktion des optischen Verschlusses der Detektorzeile 104. Jede Abtastung der Detektorzeile 104, die über den Auswerteschaltkreis 106 an die Rechnereinheit 112 ausgegeben wird, entspricht folglich demselben Wellenlängenbereich, der der speziellen Stellung bzw. Auslenkung des Gitters 102 zugeordnet ist. Bei diesem Betriebsmodus entspricht das von der Rechnereinheit 112 ausgegebene Ergebnis einer einzigen Abtastung durch die Detektorzeile 104 und umfaßt genau so viel Abtastwerte, wie Detektorelemente in der Detektorzeile 104 umfaßt sind, und ist durch eine Auflösung und einen Wellenlängenbereich definiert, wie sie durch die Länge der Detektorzeile 104, den Abstand der Detektorelemente der Detektorzeile 104, der Gitterstrichzahlen des Gitters 102 sowie die Lagebeziehung des Gitters 102 zu der Detektorzeile 104 festgelegt sind. Durch Verändern des Belichtungszeitpunktes bzw. des Phasenunterschieds zwischen der Schwingungsfrequenz des Gitters 102 und der Abtastfrequenz der Photodiodenzeile 104 ist die Wellenlängenskala bzw. der Wellenlängenbereich der spektralen Verteilung, die von der Rechnereinheit 112 ausgegeben wird, beispielsweise manuell über einen Drehschalter oder auf programmierte Weise variierbar, ohne daß sich die Auflösung des von der Rechnereinheit 112 ausgegebenen Spektrums ändert.

Bei einem weiteren Betriebsmodus bewirkt die Steuereinheit 110 mehrere Aufnahmen bzw. Belichtungen durch die Detektorzeile 104, die von der Rechnereinheit 112 miteinander kombiniert werden, um die spektrale Verteilung des Lichtes 114 zu bestimmen. Die Steuereinheit 110 gibt die Auslösepulse an den Ansteuerschaltkreis 106 beispielsweise mit einer Frequenz aus, die einem ganzzahligen Vielfachen n oder einem ganz rationalen Vielfachen n/m entspricht. Wie es im vorhergehenden beschrieben wurde, entstehen auf diese Weise pro Schwingung bzw. nach jeder (n*m)-ten Schwingung jeweils n bzw. n x m Aufnahmen der spektralen Verteilung des Lichtes 114 zu unterschiedlichen Stellungen des Gitters 102, von den jede Aufnahme aus so vielen Abtastwerten, wie Detektorelemente vorhanden sind, besteht. Die Steuereinheit definiert die Belichtungszeitpunkte beispielsweise mit einer Frequenz, die dem Doppelten der Schwingungsfrequenz des Gitters 102 entspricht. Pro Schwingung werden folglich zwei Belichtungen bzw. Aufnahmen durch die Photodiodenzeile 104 abgetastet und an die Rechnereinheit 112 weitergeleitet. Beide Aufnahmen entsprechen zwei verschiedenen, und bei geeigneter Phasenlage und Auslenkung, zwei sich nicht überschneidenden Wellenlängenbereichen, die sich gegenseitig ergänzen. Die Rechnereinheit 112 empfängt zu jeder Aufnahme den entsprechenden Wellenlängenbereich, den die Steuereinheit 110 aus der von der Ansteuereinheit 108 empfangenen Stellung zum Belichtungszeitpunkt berechnet. Auf diese Weise kann die Bestimmung der spektralen Verteilung des Lichtes 114 aus mehreren Aufnahmen mit unterschiedlichen und vorzugsweise aneinander anschließenden Wellenlängebereichen zusammengesetzt werden. Es wäre jedoch ebenfalls denkbar, daß die Steuereinheit 110 die Phasenverschiebung zwischen der Belichtung und der Schwingung derart wählt, daß die Wellenlängenbereiche bzw. Wellenlängenskalen dieser Aufnahmen sich im wesentlichen entsprechen, wobei jedoch die Wellenlängen, die den einzelnen Detektorelemente während der unterschiedlichen Aufnahmen entsprechen, ineinander verschachtelt sind, so daß virtuell die Photodiodendichte der Photodiodenzeile 104 erhöht und damit das Spektrum mit einer erhöhten Auflösung erfaßt wird. Es sind auch Kombinationen verschachtelter und nicht verschachtelter Wellenlängenabschnitte der verschiednen, zu kombinierenden Aufnahmen denkbar.

Die Rechnereinheit 112 kann die verschiedenen Aufnahmen nach der Kombination in verschiedenen Formaten ausgeben, wie z.B. paarweise jeden Intensitätswert mit seiner zugeordneten Wellenlänge, und zwar von jeder Belichtung von jedem Detektorelement. Ferner ist es möglich, daß die Rechnereinheit 112 die verschiedenen zusammengesetzten Aufnahmen zusammenfügt und anschließend interpoliert und erneut abtastet, um die spektrale Verteilung in einer Form zu erhalten, bei denen die spektralen Intensitätswerte äquidistant liegen, wie es bei verschiedenen Anwendungen zur weiteren Auswertung des Spektrums notwendig ist.

Bezugnehmend auf Fig. 2 wird darauf hingewiesen, daß die Bewegung des Gitters 102 ebenfalls quasi-statisch oder mit einer nicht-resonanten Schwingung erfolgen könnte, daß jedoch durch den resonanten Betrieb des Spektrometers von Fig. 2 eine Unempfindlichkeit gegen Stöße und Erschütterungen, eine Reduzierung des Kalibrieraufwands und aufgrund der Resonanzerhöhung eine ausreichende Auslenkung auch bei miniaturisierten Realisierungen erzielt wird.

Das Spektrometer von Fig. 2 beruht somit auf einer Kombination des in der Beschreibungseinleitung beschriebenen Miniaturspektrometertyps mit fest eingebautem Gitter mit den Möglichkeiten des Schwinggitters bzw. Schwingspiegels, der hier anstatt einer einfachen Spiegeloberfläche eine in beispielsweise CMOS-kompatibler Mikrotechnik hergestellte Gitterstruktur aufweist. Die Gitterstrukturen weisen beispielsweise 500 oder mehr Striche pro Millimeter auf. Der Antrieb erfolgt beispielsweise kapazitiv über Interdigitalelektroden.

Das Spektrometer von Fig. 2 ist dank der Fähigkeit, Aufnahmen kombinieren zu können, die aus spektralen Bestandteilen von miteinander verschachtelten Wellenlängen bestehen, bei einer maximal möglichen Auflösung betreibbar, die von der geometrischen Abmessung und insbesondere der sogenannten Basislänge des Spektrometers, der Größe des Eintritts- und Austrittsspalts, der verwendeten Brechungsordnung und der Gitterstrichzahl abhängt, und insbesondere unabhängig von physischen Abmessungen des Spektrometers, wie dem Detektorelementabstand und der Basislänge, die bei Miniaturanwendungen strengen Beschränkungen unterliegen können. Auch bei integrierten Realisierungslösungen kann deshalb trotz beschränkter geometrischer Abmessungen eine ausreichende Auflösung und ein großer spektraler Detektionsbereich durch das Kombinieren verschiedener Aufnahmen erzielt werden.

Abschließend wird bezugnehmend auf Fig. 1 und 2 darauf hingewiesen, daß zum leichteren Verständnis bei der obigen Beschreibung auf in der Optik typischerweise eingesetzte Elemente, wie z.B. strahlbündelnde und die Strahlgeometrie einschränkende Elemente, wie z.B. planare oder gewölbte Spiegel, Linsen und Spalte, verzichtet worden ist, daß dieselben jedoch bei den verschiedenen Ausführungsbeispielen vorteilhaft eingesetzt werden können.

Nur der Vollständigkeit halber wird noch darauf hingewiesen, daß aufgrund der ständigen Bewegung bzw. Schwingung des Gitters die Verwendung einer schnellen Photodiode mit geeigneter Bandbreite, die gegenüber der Spiegelfrequenz eine beispielsweise tausendmal größere Auslesefrequenz aufweist, vorteilhaft sein kann.

Ferner wird darauf hingewiesen, daß, obwohl im vorhergehen den als dispersives Element ein Spiegel mit einer Gitterstruktur verwendet worden ist, ferner ein einfaches Gitter in Transmission oder ein prismenförmig gebildetes Objekt verwendet werden könnte. In Bezug auf die Detektorzeile von Fig. 2 wird darauf hingewiesen, daß nicht nur eine Detektorzeile mit einer geradlinigen Anordnung der Detektorelemente sondern ferner ein Array von Detektorelementen oder eine Anordnung von Detektorelementen auf einer gekrümmten Linie verwendete werden könnte.

Die vorliegende Erfindung ist in einer Vielzahl von Einsatzbereichen anwendbar, die die Emissions-, Absorptions- oder Transmissions-Spektroskopie umfaßt, wobei die spektral zu untersuchende Lichtstrahlung in jeglichem Wellenlängenbereich, wie z.B. im infraroten, sichtbaren oder ultravioletten Bereich, untersucht werden kann.

## Patentansprüche

1. Spektrometer mit
einem schwingungsfähig aufgehängten und mikromechanisch hergestellten dispersiven Element (10; 102) zum spektralen Zerlegen eines Lichtstrahls (12; 114), dessen spektrale Verteilung bestimmt werden soll, in spektrale Bestandteile;
einer Einrichtung (16; 108) zum Versetzen des schwingungsfähig aufgehängten dispersiven Elements (10; 102) in eine Schwingung mit einer Schwingungsfrequenz, die in einem solchen Verhältnis zur Eigenfrequenz des schwingungsfähig aufgehängten dispersiven Elements (10; 102) ist, daß eine Resonanzüberhöhung der Schwingung des dispersiven Elements (10; 102) auftritt; und
einem Detektor (20; 104) zum Erfassen eines spektralen Bestandteils des Lichtstrahls (12; 114) mit einer Abtastfrequenz,
**dadurch gekennzeichnet, daß** das Verhältnis von Abtastfrequenz zu Schwingungsfrequenz n/m beträgt, wobei n/m eine rationale Zahl, aber keine ganze Zahl ist, und n und m teilerfremd sind.

2. Spektrometer gemäß Anspruch 1, das ferner folgendes Merkmal aufweist:
eine Steuereinrichtung (110) zum Synchronisieren der Schwingung des dispersiven Elements (10; 102) mit dem Auslesen des Detektors (20; 104).

3. Spektrometer gemäß Anspruch 1 oder 2, bei dem jeder möglichen Stellung des dispersiven Elements (10; 102) eine unterschiedliche Wellenlänge zugeordnet ist, welche dem spektralen Bestandteil entspricht, der durch den Detektor (20; 104) augenblicklich erfaßbar ist, und das ferner folgende Merkmale aufweist:
eine Einrichtung (16; 108) zum Erfassen einer augenblicklichen Stellung des dispersiven Elements (10; 102) zum Zeitpunkt der Erfassung des spektralen Bestandteils durch den Detektor (20; 104); und
eine Steuereinrichtung (110) zum Zuordnen einer der erfaßten Stellung entsprechenden Wellenlänge zu dem durch den Detektor (20; 104) erfaßten spektralen Bestandteil.

4. Spektrometer gemäß einem der Ansprüche 1 bis 3, bei dem das dispersive Element (10; 102) ein mikromechanisch hergestellter Spiegel mit einer Gitterstruktur ist, der in einem Halbleiterchip gebildet ist.

5. Spektrometer gemäß einem der Ansprüche 2 bis 4, bei dem die Steuereinheit (110) folgendes Merkmal aufweist:
eine Einrichtung zum Ansteuern des Detektors (104) mit einem Erfassungssignal mit der Abtastfrequenz.

6. Spektrometer gemäß einem der vorhergehenden Ansprüche, bei dem der Detektor (10; 102) eine Photomultiplier (10), eine Photodiode (10), eine Photodiodenzeile (102) oder eine CCD-Zeile (102) ist.

7. Spektrometer gemäß einem der vorhergehenden Ansprüche, bei dem das dispersive Element (10; 102) ein mikromechanisch, in CMOS-kompatibler Technologie hergestellter Spiegel mit einer Gitterstruktur ist.

8. Spektrometer gemäß einem der vorhergehenden Ansprüche, bei dem die Schwingungsfrequenz in einem Bereich liegt, der von 90% bis 110% der Eigenfrequenz des schwingungsfähig aufgehängten dispersiven Elements (10; 102) reicht.

9. Verfahren zur Bestimmung der spektralen Verteilung eines Lichtstrahls (12; 114), mit folgenden Schritten:
spektrales Zerlegen des Lichtstrahls (12; 114), dessen spektrale Verteilung bestimmt werden soll, in spektrale Bestandteile durch ein schwingungsfähig aufgehängtes und mikromechanisch hergestelltes dispersives Element (10; 102);
Versetzen des schwingungsfähig aufgehängten dispersiven Elements (10; 102) in eine Schwingung mit einer Schwingungsfrequenz, die in einem solchen Verhältnis zur Eigenfrequenz des schwingungsfähig aufgehängten dispersiven Elements (10; 102) ist, daß eine Resonanzüberhöhung der Schwingung des dispersiven Elements (10; 102) auftritt; und
Erfassen eines spektralen Bestandteils des Lichtstrahls (12; 114) durch einen Detektor (20; 104) mit einer Abtastfrequenz,
**dadurch gekennzeichnet, daß** das Verhältnis von Abtastfrequenz zu Schwingungsfrequenz n/m beträgt, wobei n/m eine rationale Zahl, aber keine ganze Zahl ist, und n und m teilerfremd sind.

## Claims

1. A spectrometer, comprising:
a vibratably suspended and micromechanically produced dispersive element (10; 102) for spectrally decomposing a light beam (12; 114), whose spectral distribution is to be determined, into spectral components;
a means (16; 108) for putting the vibratably suspended dispersive element (10; 102) into vibration with a vibration frequency that has such a relationship to the natural frequency of the vibratably suspended dispersive element (10; 102) that a resonance amplification of the vibration of the dispersive element (10; 102) occurs; and
a detector (20; 104) for detecting a spectral component of the light beam (12; 114) with a sampling frequency,
**characterized in that**
the relationship of sampling frequency to vibration frequency is n/m, wherein n/m is a rational number, but no integer, and with n being relatively prime with respect to m.

2. The spectrometer according to claim 1, further comprising:
a control means (110) for synchronizing the vibration of a dispersive element (10; 102) with the readout of the detector (20; 104).

3. The spectrometer according to claim 1 or 2, wherein a different wavelength is associated with any possible position of the dispersive element (10; 102), which corresponds to the spectral component that can be detected currently by the detector (20; 104), and which further comprises:
a means (16; 108) for detecting a current position of the dispersive element (10; 102) at the time of the detection of the spectral component by the detector (20; 104); and
a control means (110) for associating a wavelength corresponding to the detected position with the spectral component detected by the detector (20; 104).

4. The spectrometer according to one of claims 1 to 3, wherein the dispersive element (10; 102) is a micromechanically produced mirror with a grating structure, which is formed in a semiconductor chip.

5. The spectrometer according to one of claims 2 to 4, wherein the control unit (110) comprises:
a means for driving the detector (104) with a detection signal with the sampling frequency.

6. The spectrometer according to one of the preceding claims, wherein the detector (10; 102) is a photomultiplier (10), a photodiode (10), a photodiode line (102) or a CCD line (102).

7. The spectrometer according to one of the preceding claims, wherein the dispersive element (10; 102) is a mirror produced micromechanically in CMOS compatible technology having a grating structure.

8. The spectrometer according to one of the preceding claims, wherein the vibration frequency is in a range that reaches from 90% to 110% of the natural frequency of the vibratably suspended dispersive element (10; 102).

9. A method for determining the spectral distribution of a light beam (12; 114), comprising:
spectrally decomposing the light beam (12; 114) whose spectral distribution is to be determined, into spectral components by a vibratably suspended and micromechanically produced dispersive element (10; 102);
putting the vibratably suspended dispersive element (10; 102) into vibration with a vibration frequency that has such a relationship to the natural frequency of the vibratably suspended dispersive element (10; 102) that a resonance amplification of the vibration of the dispersive element (10; 102) occurs; and
detecting a spectral component of the light beam (12; 114) by a detector (20; 104) with a sampling frequency,
**characterized in that**
the relationship of sampling frequency to vibration frequency is n/m, wherein n/m is a rational number, but no integer, and with n being relatively prime with respect to m.

## Revendications

1. Spectromètre, avec
un élément dispersif (10 ; 102) suspendu de manière apte à osciller et produit par des techniques micromécaniques, destiné à la décomposition spectrale en composantes spectrales d'un rayon lumineux (12 ; 114) dont doit être déterminée la répartition spectrale ;
un dispositif (16 ; 108) destiné à amener l'élément dispersif (10 ; 102) suspendu de manière apte à osciller en oscillation avec une fréquence d'oscillation qui présente un rapport avec la fréquence propre de l'élément dispersif (10 ; 102) suspendu de manière apte à osciller tel qu'il se produise une surélévation de résonance de l'oscillation de l'élément dispersif (10 ; 102) ; et
un détecteur (20 ; 104) destiné à capter une composante spectrale du rayon lumineux (12 ; 114) à une fréquence de balayage,
**caractérisé par le fait que** le rapport entre la fréquence de balayage et la fréquence d'oscillation est de n/m, n/m étant un nombre rationnel, mais pas un nombre entier, et n et m étant étrangers au diviseur.

2. Spectromètre selon la revendication 1, présentant, par ailleurs, la caractéristique suivante :
un dispositif de commande (110) destiné à synchroniser l'oscillation de l'élément dispersif (10 ; 102) avec la lecture du détecteur (20 ; 104).

3. Spectromètre selon la revendication 1 ou 2, dans lequel est associée à chaque position possible de l'élément dispersif (10 ; 102) une longueur d'onde différente qui correspond à la composante spectrale qui est captée actuellement par le détecteur (20 ; 104), et qui présente, par ailleurs, les caractéristiques suivantes :
un dispositif (16 ; 108) destiné à capter une position actuelle de l'élément dispersif (10 ; 102) au moment de la détection de la composante spectrale par le détecteur (20 ; 104) ; et
un dispositif de commande (110) destiné à associer à la composante spectrale captée par le détecteur (20 ; 104) une longueur d'onde correspondant à la position détectée.

4. Spectromètre selon l'une des revendications 1 à 3, dans lequel l'élément dispersif (10 ; 102) est un miroir à structure de grille produit par des techniques micromécaniques qui est formé dans une puce à semi-conducteur.

5. Spectromètre selon l'une des revendications 2 à 4, dans lequel l'unité de commande (110) présente la caractéristique suivante :
un dispositif destiné à activer le détecteur (104) par un signal de détection à la fréquence de balayage.

6. Spectromètre selon l'une des revendications précédentes, dans lequel le détecteur (10 ; 102) est un photomultiplicateur (10), une photodiode (10), une ligne de photodiodes (102) ou une ligne de CCD (102).

7. Spectromètre selon l'une des revendications précédentes, dans lequel l'élément dispersif (110 ; 102) est un miroir à structure de grille produit par des techniques micromécaniques selon une technologie compatible avec CMOS.

8. Spectromètre selon l'une des revendications précédentes, dans lequel la fréquence d'oscillation se situe dans une plage qui varie de 90% à 110% de la fréquence propre de l'élément dispersif (10 ; 102) suspendu de manière apte à osciller.

9. Procédé pour déterminer la répartition spectrale d'un rayon lumineux (12 ; 114), avec les étapes suivantes consistant à :
décomposer spectralement en composantes spectrales le rayon lumineux (12 ; 114) dont doit être déterminée la répartition spectrale par l'élément dispersif (10 ; 102) suspendu de manière apte à osciller et produit par des techniques micromécaniques ;
amener l'élément dispersif (10 ; 102) suspendu de manière apte à osciller en oscillation avec une fréquence d'oscillation qui présente un rapport avec la fréquence propre de l'élément dispersif (10 ; 102) suspendu de manière apte à osciller tel qu'il se produise une surélévation de résonance de l'oscillation de l'élément dispersif (10 ; 102) ; et
capter une composante spectrale du rayon lumineux (12 ; 114) par un détecteur (20 ; 104) à une fréquence de balayage,
**caractérisé par le fait que** le rapport entre la fréquence de balayage et la fréquence d'oscillation est de n/m, n/m étant un nombre rationnel, mais pas un nombre entier, et n et m étant étrangers au diviseur.
